# EUROPÄISCHE PATENTANMELDUNG

(11) **EP 4 717 092 A1**
(43) Veröffentlichungstag der Anmeldung: **01.04.2026**
(21) Anmeldenummer: 25203159.6
(22) Anmeldetag: 18.09.2025
(51) Int. Cl.: A21D 8/04, A21D 2/36, A21D 13/045, A23L 11/00, A23L 11/50

(54) **VERFAHREN ZUR HERSTELLUNG EINES VORTEIGES**

(30) Priorität: 30.09.2024 EP 24203644
(71) Anmelder: PANADORO GROUP AG, 6302 Zug (CH)
(72) Erfinder: Grootes-Ziegler, Meiert Johan, 9548 Matzingen (CH); Herzig, Andreas, 8280 Kreuzlingen (CH)
(74) Vertreter: Keller Schneider Patent- und Markenanwälte AG

(57) **Zusammenfassung**

Die Erfindung betrifft ein Verfahren zur Herstellung eines Vorteiges, vorzugsweise eines Vorteigkonzentrates, umfassend die Schritte:
a) Mechanische Behandlung, insbesondere durch Windsichten, eines Hülsenfruchtmehls, insbesondere von Ackerbohnenmehl, und/oder eines Hülsenfruchthülsenmehls, insbesondere von Ackerbohnenhülsenmehl;
b) Vermengung des behandelten Hülsenfruchtmehls und/oder Hülsenfruchthülsenmehls aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur und
c) Fermentation, insbesondere Feststofffermentation, des aus Schritt b) erhaltenen Teiggemisches, wobei
- die Fermentation mindestens eine Fermentationsphase umfasst,
- die Fermentation gesamthaft bis zu 72 Stunden, insbesondere 18 - 72 Stunden, dauert und
- die Fermentation bei zunehmender und im Anschluss bei abnehmender Temperatur abläuft, insbesondere so, dass die Temperatur des Teiggemisches während der Fermentation eine Maximaltemperatur von höchstens 36 °C und am Ende der Fermentation eine Minimaltemperatur von 2 - 5 °C aufweist.

## Beschreibung

### Technisches Gebiet

Die Erfindung betrifft ein Verfahren zur Herstellung eines Vorteiges, vorzugsweise eines Vorteigkonzentrates, umfassend eine mechanische Behandlung eines Hülsenfruchtmehls und/oder eines Hülsenfruchthülsenmehls, eine Vermengung des behandelten Hülsenfruchtmehls und/oder Hülsenfruchthülsenmehls zu einem Teiggemisch mit einer Schüttflüssigkeit sowie mit einer ersten Mikroorganismenkultur, eine Fermentation des Teiggemisches, wobei die Fermentation mindestens eine Fermentationsphase umfasst, bis zu 72 Stunden dauert und bei zunehmender und im Anschluss abnehmender Temperatur abläuft.

### Stand der Technik

Verfahren zur Herstellung von Vorteigen sind aus dem Stand der Technik bekannt. In der Backindustrie sind Vorteige ein zentrales Element, um die Qualität und den Geschmack von Backwaren zu verbessern, z.B. durch eine bessere Textur, ein intensiveres Aroma und/oder eine verlängerte Frischhaltung. Verbreitete Herstellungsverfahren für Vorteige umfassen z.B. die Poolish-, Biga- oder Sponge-Methode. Bis anhin bekannte Herstellungsverfahren für Vorteige können sich bspw. in den Anteilen der Zutaten, in der Fermentationszeit und/oder der Fermentationstemperatur unterscheiden.

Die EP 1 366 668 (VERIPAN AG) beschreibt in diesem Zusammenhang u.a. ein Vorteigl<onzentrat sowie ein Verfahren zur Herstellung eines Vorteigkonzentrats. Das Konzentrat basiert dabei auf einer Getreidekleie-Komponente, die als Nebenprodukt aus Müllereien stammt. Bei (Getreide-) Kleie handelt es sich in der Regel um eine Fraktion bestehend aus den Randschichten des Getreidekorns und dem Keimling - die sogenannten Schalenteile.

Die Komponente kann auf Kleie der wichtigsten Getreidearten basieren: Weizen, Saatweizen, Hartweizen, Einkorn, Dinkel, Emmer, Gerste, Roggen Hafer, Reis, Hirse, Mais Triticale oder Sorghum. Die Kleie kann in einem ersten Schritt durch thermische, thermopneumatische, mechanisch-thermische oder mechanische Modifizierung verarbeitet werden. Nach diesen möglichen Verfahrensschritten folgt typischerweise die Zugabe von Wasser und optional Hefe. Das Vorteigkonzentrat erwärmt sich auf 26 - 32 °C, maximal auf 36 °C und wird dann innerhalb von 72 h auf eine Temperatur von ca. 2 - 5 °C herabgekühlt.

Die US 2023/0284635 A1 (FRITO-LAY NORTH AMERICA INC.) befasst sich mit der Herstellung von Mehl sowie Teigen mit verbesserten organoleptischen Eigenschaften, insbesondere durch Fermentationsmethoden, um unangenehme Geschmackskomponenten zu reduzieren. Dem Teig und dem Endprodukt kann so ein weicheres Texturprofil verliehen werden, z.B. in Form einer besseren Verarbeitungsfähigkeit oder eines verbesserten Mundgefühls. Gemäss einer Ausführungsform wird Mehl, z.B. aus Hülsenfrüchten wie Ackerbohnen, mit Wasser vermengt, um ein Teiggemisch zu formen. Danach kann ein Starter, z.B. Milchsäurebakterien, hinzugefügt werden, damit das Teiggemisch eine Fermentation, z.B. in einem Solid State Verfahren, durchläuft. Die Fermentationszeit liegt bei ca. 2.5 - 17 h und die Temperatur bei ca. 65 - 120 °F (ca. 18 - 50 °C). Ausserdem ist es möglich, dass das eingesetzte Mehl vor der Weiterverarbeitung durch Hitze modifiziert wird, um den Stärkegehalt anzupassen. Das Teiggemisch kann zu Lebensmittelprodukten wie z.B. Keksen weiterverarbeitet werden. Das beschriebene fermentierte Mehl soll einen besseren Geschmack aufweisen und zu einem besseren Mundgefühl führen, da die Konzentration der Geschmackskomponenten durch das beschriebene Verfahren verändert werden kann. Zudem kann das Verfahren auch zu einer weicheren Teigtextur führen.

Die bekannten Herstellungsverfahren für Vorteige haben sich jedoch als unbefriedigend erwiesen. Im Falle von Getreidebasierten Backwaren lassen sich organoleptische Eigenschaften wie z.B. eine weisse Krume oder eine knusprige Kruste nicht wie gewünscht erreichen. Auch beim Einsatz anderer pflanzlichen Komponenten anstelle von Getreide, wie z.B. Hülsenfrüchten und/oder Pseudocerealien, konnte das Ziel mit den bekannten Verfahren nicht erreicht werden.

Es besteht daher nach wie vor Bedarf nach verbesserten Lösungen.

### Darstellung der Erfindung

Aufgabe der Erfindung ist es daher, eine Lösung bereitzustellen, welche die im Stand der Technik vorhandenen Nachteile zumindest verringert. Insbesondere ist es eine Aufgabe der Erfindung, ein Verfahren bereitzustellen, welches verbesserte organoleptische, verarbeitungstechnische und/oder backtechnische Eigenschaften bei der Herstellung von Backwaren gewährleistet, wie z.B. eine schnellere Teigentwicklung, eine bessere Dehnungsfähigkeit, eine verbesserte Gärtoleranz, ein grösseres Backvolumen, eine knusprigere Kruste, eine gleichmässigere und/oder intensivere Bräunung, einen attraktiveren Glanz, einen verbesserten Geruch, einen verminderten Bohnengeschmack und/oder eine längere Frischhaltung.

Diese Aufgabe wird durch die Merkmale des unabhängigen Verfahrensanspruchs 1 gelöst.

Die Erfindung betrifft demnach ein Verfahren zur Herstellung eines Vorteiges, vorzugsweise eines Vorteigkonzentrates, umfassend die Schritte:
a) Mechanische Behandlung, insbesondere durch Windsichten, eines Hülsenfruchtmehls, insbesondere von Ackerbohnenmehl, und/oder eines Hülsenfruchthülsenmehls, insbesondere von Ackerbohnenhülsenmehl;
b) Vermengung des behandelten Hülsenfruchtmehls und/oder Hülsenfruchthülsenmehls aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur und
c) Fermentation, insbesondere Feststofffermentation, des aus Schritt b) erhaltenen Teiggemisches, wobei
   - die Fermentation mindestens eine Fermentationsphase umfasst,
   - die Fermentation gesamthaft bis zu 72 Stunden, insbesondere 18 - 72 Stunden, dauert und
   - die Fermentation bei zunehmender und im Anschluss bei abnehmender Temperatur abläuft, insbesondere so, dass die Temperatur des Teiggemisches während der Fermentation eine Maximaltemperatur von höchstens 36 °C und am Ende der Fermentation eine Minimaltemperatur von 2 - 5 °C aufweist.

Als Vorteige werden Teige verstanden, die vor der eigentlichen Teigzubereitung angesetzt werden und dem Hauptteig zugeführt werden. Vorteige werden zur Herstellung unterschiedlichster Backwaren eingesetzt und sind in der Regel flüssig.

Als Vorteigkonzentrate werden Vorteige bezeichnet, die im technologischen Sinn im Vergleich zu klassischen flüssigen Vorteigen in hochkonzentrierter Form vorliegen. Vorteigkonzentrate können eine deutlich höhere Wirkstoffdichte aufweisen, da Geschmacksträger, Fermentationsprodukte, Säuren und Aromakomponenten im Vergleich zu klassischen Vorteigen stark angereichert sind. Aufgrund dieser Konzentration ist lediglich eine geringe Dosierung erforderlich: Bereits 2-4 % auf die Mehlmenge erzielen die gleiche technologische Wirkung wie 20-40 % frisch geführter Vorteig.

Mit Backwaren sind auf dem erfindungsgemässen Vorteig, vorzugsweise Vorteigkonzentrat, basierende gebackene Lebensmittelprodukte gemeint.

Als mechanische Behandlung werden mechanische Trennverfahren verstanden wie z.B. Sieben oder Windsichten. Mit Windsichten wird ein mechanisches Trennverfahren verstanden, bei welchem Partikel anhand ihres Verhältnisses von Trägheits- und/oder Schwerkraft zum Strömungswiderstand in einem Gasstrom getrennt werden.

Als Hülsenfruchtmehle werden Mehle verstanden, die aus den Streufrüchten bzw. Samen von Hülsenfrüchtlern (Leguminosen) gewonnen werden.

Als Hülsenfruchthülsenmehle werden Mehle verstanden, die aus der Hülse von Hülsenfrüchtlern (Leguminosen) gewonnen werden. Die Hülse ist dabei jener Teil, der in seinem Innern die Streufrüchte bzw. Samen der Hülsenfrüchtler enthält.

Das Ackerbohnenmehl und/oder Ackerbohnenhülsenmehl basiert insbesondere auf dem Mehl der Ackerbohne *Vicia faba.*

Als Schüttflüssigkeit wird eine Flüssigkeit verstanden, die bei einer Teigzubereitung hinzugefügt wird, um die trockenen Zutaten zu binden und zu einem formbaren Teig zu verarbeiten. Beispiele von Schüttflüssigkeiten sind Wasser, Hefefiltratwasser, Milch, Buttermilch, Säfte oder Öle.

Mit Hefefiltratwasser ist ein Nebenstrom aus der Verarbeitung von Hefe gemeint, der beim Filtrieren und Abtrennen von Zellbestandteilen der Hefe entsteht. Genauer gesagt ist Hefefiltratwasser ein flüssiges Filtrat, das entsteht, wenn eine Suspension von Hefe nach mechanischem und/oder chemischem Aufschluss, Autolyse, Extraktion und/oder Fermentation so behandelt wird, dass die unlöslichen Zellreste abgetrennt werden. Das flüssige Filtrat enthält damit die in Wasser löslichen nährstoffreichen Komponenten der Hefe, wie z.B. lösliche Bestandteile wie Peptide, Aminosäuren, Proteine, Nukleotide und andere bioaktive Moleküle, Mineralstoffe, Spurenelemente und wasserlösliche Vitamine.

Die Zugabe von Hefefiltratwasser hat diverse Vorteile:
- Es wirkt als natürlicher Umami-Geschmacksverstärker, da es freie Aminosäuren und Nukleotide enthält
- Es wirkt geschmacksverstärkend aber zugleich subtiler als reine Hefe
- Es dient als natürliche Basis für Aromen, Brühen und/oder funktionelle Getränke
- Es kann als Trägerflüssigkeit und/oder Fermentationsmedium weiterverwendet werden
- Es ist nährstoffreich, da es B-Vitamine, z. B. B1, B2 und B6, Mineralstoffe und/oder Aminosäuren liefert
- Es stellt leicht verfügbare Aminosäuren und Peptide bereit
- Es weist weniger Bitterstoffe auf im Vergleich zu Hefeextrakt
- Es ist besser verträglich für empfindliche Menschen, da es keine lebenden Hefezellen umfasst
- Es unterstützt die Fermentation, z.B. in Backwaren oder bei Milchsäurebakterien

Die Feststofffermentation wird zur Herstellung von Biomolekülen u.a. in der Lebensmittelindustrie eingesetzt. Bei diesen Biomolekülen handelt es sich meist um Stoffwechselprodukte, die von ausgewählten Mikroorganismen wie z.B. Bakterien, Pilzen oder Hefen erzeugt werden, die auf einem für diesen Zweck ausgewählten festen, feuchten, nicht löslichen oder nur teilweise löslichen organischen Substrat, wie z.B. einem Teiggemisch, gezüchtet werden. Es findet dabei ein mikrobieller Abbau des Substrats statt, wobei das Substrat als Nährstoff und Energiequelle für die Mikroorganismen dient. Diese Kultivierung ausgewählter Mikroorganismen kann unter Abwesenheit von freiem Wasser stattfinden.

Mit einer Fermentationsphase ist eine zeitliche Spanne gemeint, in welcher eine Fermentation stattfindet.

Mit einer zunehmenden Temperatur ist gemeint, dass die Temperatur kontinuierlich zunimmt.

Mit einer abnehmenden Temperatur ist gemeint, dass die Temperatur kontinuierlich abnimmt.

Mit einer Maximaltemperatur ist eine tatsächlich erreichte Höchsttemperatur gemeint.

Mit einer Minimaltemperatur ist eine tatsächlich erreichte Mindesttemperatur gemeint.

Ein Vorteil der erfindungsgemässen Lösung ist, dass dadurch der Teig- und Backwarengeschmack verbessert werden kann. Insbesondere in Bezug auf Bohnenmehle werden durch die Feststofffermentation bzw. die an der Feststofffermentation beteiligten Mikroorganismen bestimmte sekundäre Pflanzenstoffe wie z.B. Isoflavone, Gerbstoffe (Tannine), Vicin und Convicin, die zu einem bohnenähnlichen oder bitteren Geschmack des Teiges beitragen können, mindestens reduziert oder ganz eliminiert.

Durch die erfindungsgemässe Lösung kann die Verwendung von zusätzlichen backfördernden und/oder konservierenden Substanzen zumindest reduziert oder es kann gänzlich auf sie verzichtet werden. Dies vermindert den Herstellungsaufwand von Backwaren, reduziert die Produktionskosten und verlängert die Haltbarkeit der Teige und/oder Backwaren.

Besonders bevorzugt basiert das Hülsenfruchtmehl auf geschälten Hülsenfrüchten.

In einer besonderen Ausführungsform wird vom Hülsenfruchtmehl in Schritt a) eine stärkeangereicherte Hülsenfruchtmehlfraktion abgetrennt.

Mit einer stärkeangereicherten Hülsenfruchtmehlfraktion ist ein Anteil des Hülsenfruchtmehls gemeint, welches nach der mechanischen Behandlung einen höheren Stärkeanteil aufweist als vor der mechanischen Behandlung.

Insbesondere wird in Schritt b) die stärkeangereicherte Hülsenfruchtmehlfraktion und/oder das behandelte Hülsenfruchthülsenmehl aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur vermengt.

In einer besonderen Ausführungsform wird das Hülsenfruchtmehl in Schritt a) in eine protein- und eine stärkeangereicherte Hülsenfruchtmehlfraktion aufgetrennt.

Besonders bevorzugt wird das Hülsenfruchtmehl in Schritt a) in eine erste protein- und eine erste stärkeangereicherte Hülsenfruchtmehlfraktion aufgetrennt und die erste stärkeangereicherte Hülsenfruchtmehlfraktion im Anschluss weiter in eine zweite protein- und eine zweite stärkeangereichte Hülsenfruchtmehlfraktion aufgetrennt.

Insbesondere entspricht die proteinangereicherte Hülsenfruchtmehlfraktion der ersten proteinangereicherten Hülsenfruchtmehlfraktion und die stärkeangereicherte Hülsenfruchtmehlfraktion der ersten stärkeangereicherten Hülsenfruchtmehlfraktion.

In einer weiteren bevorzugten Ausführungsform kann es sich bei der stärkeangereicherten Hülsenfruchtmehlfraktion in Schritt b) um die erste und/oder die zweite stärkeangereicherte Hülsenfruchtmehlfraktion handeln.

Dies hat den Vorteil, dass der Proteingehalt der Hülsenfruchtmehlfraktion und/oder des Hülsenfruchtmehls gesenkt werden kann, bzw. dass der Stärkegehalt der stärkeangereicherten Hülsenfruchtmehlfraktion und/oder des Hülsenfruchtmehls erhöht werden kann. In anderen Worten wird der Stärkegehalt in der Hülsenmehlfraktion und/oder dem Hülsenfruchtmehl damit aufkonzentriert.

Mit einer proteinangereicherten Hülsenfruchtmehlfraktion ist eine Fraktion gemeint, die zu 10 - 90 Gew. - %, insbesondere 20 - 90 Gew. - %, im Speziellen 40 - 90 Gew. - %, bezogen auf das Gesamtgewicht der Hülsenfruchtmehlfraktion, Proteinmoleküle umfasst.

Mit einer stärkeangereicherten Hülsenfruchtmehlfraktion ist eine Fraktion gemeint, die zu 10 - 90 Gew. - %, insbesondere 20 - 90 Gew. - %, im Speziellen 40 - 90 Gew. - %, bezogen auf das Gesamtgewicht der Hülsenfruchtmehlfraktion, Stärkemoleküle umfasst.

Insbesondere weist die nach Schritt a) erhaltene stärkeangereicherte Hülsenfruchtmehlfral<tion einen Stärkeanteil von mindestens 60 Gew. - %, bezogen auf das Gesamtgewicht des Hülsenfruchtmehls vor Schritt a), auf.

Weiter ist es möglich, durch das erfindungsgemässe Verfahren eine deutliche Verringerung, insbesondereeine Verringerung von 50-90%, der in einigen Hülsenfrüchten vorkommenden sekundären Pflanzenstoffe wie z. B. Vicin und Convicin zu erreichen.

Insbesondere basiert das Hülsenfruchtmehl und/oder Hülsenfruchthülsenmehl auf mindestens einem Mehl basierend auf Erbsen, insbesondere Gelberbsen und/oder Grünerbsen, Bohnen, insbesondere weisse Bohnen, grüne Bohnen, rote Bohnen und/oder Ackerbohnen, I<ichererbsen, Linsen, insbesondere rote Linsen und/oder grüne Linsen, Lupinen, insbesondere Süsslupinen, und/oder Sojabohnen.

Ganz besonders bevorzugt basiert das Hülsenfruchtmehl auf Ackerbohnenmehl.

Im Speziellen basiert das Hülsenfruchthülsenmehl auf Ackerbohnenhülsenmehl.

Ackerbohnenmehl und/oder Ackerbohnenhülsenmehl, insbesondere stärkeangereichertes Ackerbohnenmehl, weisen den Vorteil auf, dass sie einen hohen Gehalt des Enzyms Lipoxygenase aufweisen. Das Enzym führt zu einer stabileren, homogeneren und feineren Teigstruktur, indem es ungesättigte Fettsäuren oxidiert, wodurch Lipidhydroperoxide entstehen, die wiederum mit Bestandteilen des Ackerbohnenmehls und/oder Ackerbohnenhülsenmehl reagieren. Dadurch erhöht sich die Stabilität des Teiges, die Gärtoleranz wird verbessert und das Volumen des Gebäcks nimmt zu. Zudem können die Produkte der Lipidoxidaiton durch Lipoxygenase flüchtige Verbindungen erzeugen, die den Geschmack und das Aroma von Backwaren verbessern. Hauptsächlich dient die Lipoxygenase jedoch der Entfärbung des Teiges: Die entstehenden Lipidhydroperoxide oxidieren und bauen die im Ackerbohnenmehl und/oder Ackerbohnenhülsenmehl enthaltenen Carotinoide ab, was zu einer Bleichung des Teiges und somit zu einer weisseren Krume führt.

Es hat sich gezeigt, dass Ackerbohnenmehl und/oder Ackerbohnenhülsenmehl, insbesondere stärkeangereichertes Ackerbohnenmehl, nebst Lipoxygenase weitere Enzyme aufweisen, wie z.B. Phytasen, Amylasen (Alpha- und Beta-Amylase), Proteasen, saure Proteasen, Transglutaminase, Phosphorylasen, Alpha-Galactosidase, Galactokinase, Lipasen, Phospholipasen, Polyphenoloxidasen und saure Phosphatasen. Überraschend hat sich herausgestellt, dass diese Enzyme besonders vorteilhafte Effekte in Bezug auf die Teig- und/oder Backwareneigenschaften haben können. Es wird davon ausgegangen, dass die vorgenannten Enzyme die nachfolgend beschriebenen positiven Effekte aufweisen.

Phytasen sind Enzyme, welche Phytinsäure hydrolisieren können und dabei Phosphate sowie Inositolphosphate freisetzen. Phytinsäure ist ein Antinährstoff, der die Aufnahme bestimmter Mineralstoffe im menschlichen Verdauungssystem behindern kann. Phytasen verbessern demnach die Verfügbarkeit von Mineralstoffen, wie Calcium, Magnesium und Eisen, sowie die Nährstoffaufnahme. Dies kann die Ernährungsqualität der Backwaren, insbesondere Backwaren mit Leguminosenmehl, verbessern. Weiter kann Phytase durch die Freisetzung von Phosphat das Wachstum und die Aktivität der Mikroorganismen, wie z.b. Hefe, unterstützen, was zu einem besseren Teigaufgang und einer besseren Teigstabilität beiträgt. Der Abbau von Phytinsäure kann auch zu einer Verbesserung des Geschmacks führen, da Phytinsäure einen leicht bitteren Geschmack haben kann.

Amylasen bauen während des Backprozesses Stärke zu Zuckern ab. Sie verbessern damit die Teigstruktur, erhöhen das Volumen und fördern die I<rustenbräunung.

Proteasen bauen Proteine ab, was zu einer verbesserten Teigstruktur- und elastizität führt. Dadurch kann die Teigbearbeitung und das I<rumenbild verbessert werden.

Saure Proteasen bauen Proteine unter sauren Bedingungen zu kleineren Peptiden und Aminosäuren ab. Dies kann folgende vorteilhaften Auswirkungen auf den Teig und/oder die daraus resultierenden Backwaren haben:
- Förderung der Aktivität von Hefe und anderen Mikroorganismen aufgrund besserer Verfügbarkeit von Phosphaten
- Stabilere Teigstruktur
- Bessere Verarbeitbarkeit des Teiges
- Grösseres Backvolumen
- Gleichmässigere Krume
- Verbesserte Bioverfügbarkeit von Mineralstoffen wie Calcium, Magnesium und Eisen aufgrund des Abbaus von Phytinsäuren und anderen Phosphatverbindungen

Transglutaminase vernetzt Proteine durch die Bildung von kovalenten Bindungen zwischen Glutamin- und Lysinresten. Dies kann folgende vorteilhaften Auswirkungen auf den Teig und/oder die daraus resultierenden Backwaren haben:
- Bessere Teigstabilität
- Höhere Teigelastizität
- Leichtere Handhabung und Verarbeitung durch erhöhte Festigkeit des Teiges
- Bessere Gasretention
- Grössere Volumenzunahme der Backwaren
- Längere Frischhaltung der Backwaren durch erhöhtes Wasserbindevermögen
- Gleichmässigere Krume

Besseres Mundgefühl beim Verzehr der Backwaren Phosphorylasen katalysieren den Abbau von Glycosidbindungen unter Verwendung von Phosphat anstelle von Wasser. Dies kann folgende vorteilhaften Auswirkungen auf den Teig und/oder die daraus resultierenden Backwaren haben:
- Höhere Hefeaktivität und Volumenzunahme des Teiges aufgrund einer Erhöhung des Zuckeranteils im Teig
- Bessere Fermentierung, schnellere Teigentwicklung und besseres Aufgehen des Teiges bei Zugabe zusätzlicher fermentierbarer Zucker
- Verbesserte I<rustenfarbe und -geschmack aufgrund Förderung der Maillard-Reaktion und I<aramellisierung wegen erhöhtem Zuckergehalt
- Feinere und gleichmässigere Krume

Alpha-Galactosidase baut komplexe Zuckermoleküle, insbesondere Alpha-Galactoside wie Raffinose, Stachyose oder Verbascose, in einfachere Zuckermoleküle ab. Dies kann folgende vorteilhaften Auswirkungen auf den Teig und/oder die daraus resultierenden Backwaren haben:
- Höhere Hefeaktivität und Volumenzunahme des Teiges aufgrund einer Erhöhung des Zuckeranteils im Teig
- Bessere Fermentierung, schnellere Teigentwicklung und besseres Aufgehen des Teiges bei Zugabe zusätzlicher fermentierbarer Zucker
- Verbesserte I<rustenfarbe und -geschmack aufgrund Förderung der Maillard-Reaktion wegen erhöhter Zuckerproduktion
- Förderung der Verdaulichkeit von Backwaren durch den Abbau gasverursachender Alpha-Galactoside

Galactokinase katalysiert die Phosphorylierung von Galactose zu Galactose-1-phosphat, einem Schritt im Leloir-Galactose-Metabolismusweg. Dies kann folgende vorteilhaften Auswirkungen auf den Teig und/oder die daraus resultierenden Backwaren haben:
- In Kombination mit anderen Enzymen des Leloir-Wegs kann Galactose aus der Nahrung effizienter genutzt werden
- Zuckerkonzentration und Hefeaktivität im Teig kann reguliert werden
- Indirekt positiver Einfluss auf die Verfügbarkeit von Energieressourcen für die Hefe durch Metabolismus von Galactose

Lipasen hydrolisieren Fette zu freien Fettsäuren und Glycerin. Dies kann folgende vorteilhaften Auswirkungen auf den Teig und/oder die daraus resultierenden Backwaren haben:
- Erhöhung der Weichheit, Elastizität und Verarbeitbarkeit des Teiges
- Verbesserte Dispersion von Fetten im Teig durch Wirkung von Fettsäuren und
- Monoglyceriden als Emulgatoren
- Stabilere Teigstruktur
- Gleichmässigere Teigstruktur
- Bessere Gashaltefähigkeit des Teiges und grösseres Volumen der Backwaren
- Verlängerung der Frischhaltung von Backwaren durch Verlangsamen der Retrogradation der Stärke
- Verbesserte Krustenbildung- und färbung durch freigesetzte Fettsäuren
- Feinere Textur der Backwaren
- Weichere und feinere Krumenstruktur

Phospholipasen hydrolisieren Phospholipide und zerlegen diese in verschiedene Produkte wie Fettsäuren, Lysophospholipide und andere Phosphatidsäuren. Dies kann folgende vorteilhaften Auswirkungen auf den Teig und/oder die daraus resultierenden Backwaren haben:
- Verbesserte Dispersion von Fetten und Ölen im Teig für eine bessere und Teigstruktur- und stabilität durch Umwandlung von Phospholipiden in stark emulgierende Lysophospholipide
- Verbesserte Verarbeitbarkeit des Teiges
- Gleichmässigere Teigstruktur
- Luftigere Teigstruktur
- Grösseres Teigvolumen
- Erhöhte Teigelastizität- und stabilität
- Weichere und feinere Textur der Backwaren durch verbesserte Krumenstruktur
- Verbesserte Gashaltefähigkeit
- Verlängerung der Frischhaltung von Backwaren durch Verlangsamem der Retrogradation der Stärke
- Weichere Krume

Polyphenoloxidase oxidiert phenolische Verbindungen und bildet dabei braune Pigmente. Dies kann folgende vorteilhaften Auswirkungen auf den Teig und/oder die daraus resultierenden Backwaren haben:
- Bräunung von Teigen und Mehlen für gewünschte Backwaren
- Verbesserung der Haltbarkeit von Backwaren durch antioxidative Eigenschaften
- Förderung der Bildung von Aromastoffen
- Verbesserte Nährstoffqualität von Backwaren durch Vorbeugung oxidativer Schäden aufgrund antioxidativer Produkte

Saure Phosphatasen hydrolisieren Phosphatgruppen von phosphorylierten Substraten unter sauren Bedingungen. Dies kann folgende vorteilhaften Auswirkungen auf den Teig und/oder die daraus resultierenden Backwaren haben:
- Erhöhung der Phosphatverfügbarkeit
- Förderung der Aktivität von Hefe und anderen Mikroorganismen im Teig
- Verbesserte Bioverfügbarkeit von Mineralstoffen wie Calcium, Magnesium und Eisen aufgrund des Abbaus von Phytinsäuren und anderen Phosphatverbindungen
- Stabilere Teigstruktur
- Verbesserte Verarbeitbarkeit des Teiges
- Verbesserter Teigaufgang
- Gleichmässigere I<rumenbildung
- Höheres Volumen der Backwaren
- Verbesserte Textur der Backwaren

Durch das erfindungsgemässe Verfahren können native Enzyme des Hülsenfruchtmehls und/oder Hülsenfruchthülsenmehls gezielt kultiviert werden, wodurch sich deren enzymatischen Eigenschaften erhöhen. Dies ist ein Vorteil gegenüber einer direkten Zugabe, d.h. ohne Fermentation, von Hülsenfruchtmehl und/oder Hülsenfruchthülsenmehl zu einem Teig.

Im Vergleich zu bereits bekannten Verfahren weisen die vorgenannten Enzyme durch das erfindungsgemässe Verfahren insbesondere eine höhere Wirksamkeit auf.

Hülsenfruchtmehl, insbesondere Ackerbohnenmehl, und/oder Hülsenfruchthülsenmehl, insbesondere Ackerbohnenhülsenmehl, weisen weiter den Vorteil auf, dass sie zu einer verbesserten Wasserbindung, einer höheren Teigelastizität, einer gleichmässigeren Fermentation, einer kontrollierteren CO₂-Entwicklung, einer stärkeren Vernetzung der Kleberstruktur, einer verringerten Teigschwäche, einer verbesserten Teigverarbeitbarkeit in automatisierten Prozessen, einem gesteigerten Ofentrieb und dadurch grösseren Brotvolumina, einer feineren und gleichmässigeren Porung der Krume, einer elastischen Struktur der Krume, einer intensiveren Bräunung der Kruste, einem attraktiveren Glanz der Kruste, einem verbesserten Aroma und Geschmack des Brotes, einem erhöhten Ballaststoffgehalt, einer verbesserten Aminosäurebilanz im Brot, einer Reduktion von Phytinsäure und somit einer verbesserten Bioverfügbarkeit von Eisen, Zink und Magnesium und/oder zu einem erhöhten Polyphenolgehalt führen können.

Insbesondere für Hülsenfruchthülsenmehl, im Speziellen Ackerbohnenhülsenmehl, hat sich überraschend herausgestellt, dass sich der Ofentrieb deutlich steigern lassen kann sowie dass grössere Brotvolumina, eine intensivere Bräunung der Kruste, ein attraktiverer Glanz der Kruste und eine deutliche Anreicherung an Ballaststoffen im Brot erreicht werden können.

Zusätzliche Vorteile von Hülsenfruchtmehl, insbesondere Ackerbohnenmehl, und/oder Hülsenfruchthülsenmehl, insbesondere Ackerbohnenhülsenmehl, sind die Nutzung von pflanzlichen Nebenströmen zur Reduktion der Umweltbelastung (Upcycling) sowie eine natürliche Sauerteigführung ohne Zusatzstoffe.

In einer bevorzugten Ausführungsform ist die Schüttflüssigkeit Wasser, Hefefiltratwasser und/oder Ananassaft.

Mit Ananassaft wird ein fruchthaltiger Saft basierend auf der Pflanzengattung der Ananas, insbesondere *Ananas comosus,* verstanden. Als fruchthaltiger Saft ist vorliegend ein aus Früchten oder mehreren Fruchtarten gewonnenes flüssiges Erzeugnis gemeint, insbesondere für die menschliche Ernährung. Im Speziellen beträgt der Fruchtgehalt des fruchthaltigen Safts mindestens 25 Vol. - %, bevorzugt mindestens 50 Vol. - %, im Speziellen mindestens 75 Vol. - %, ganz speziell bevorzugt 100 Vol. - %, bezogen auf das Gesamtvolumen des fruchthaltigen Safts.

Der vorliegend beschriebene Ananassaft wird insbesondere aus einem geniessbaren Teil gesunder und reifer Ananasfrüchte gewonnen.

Es ist möglich, dass der Ananassaft ein fruchthaltiger Saft in Form eines Direktsaftes ist. Mit Direktsaft wird eine Art von fruchthaltigem Saft verstanden, der nach dem Pressen und I<eltern filtriert und sofort abgefüllt wird. Insbesondere wird der Direktsaft nicht pasteurisiert.

In einer besonders bevorzugten Ausführungsform ist der Ananassaft kein Fruchtsaftkonzentrat.

Mit Fruchtsaftkonzentrat ist ein konzentrierter fruchthaltiger Saft gemeint, für dessen Herstellung normalerweise eine Erhitzung und Verdampfung des fruchthaltigen Safts vorgenommen wird. Durch die Zugabe von Trinkwasser, Fruchtfleisch, Fruchtmark, Aromen (bei Traubensaft auch möglich: Weinsäuresalzen) und/oder Zellen aus der dem Saft zugrundeliegenden Fruchtart, z.B. Ananas, zum Konzentrat kann ein fruchthaltiger Saft hergestellt werden, insbesondere ein fruchthaltiger Saft mit einem Fruchtgehalt von 100 Vol. - %, bezogen auf das Gesamtvolumen des fruchthaltigen Safts. Anders gesagt wird der fruchthaltige Saft durch physikalischen Entzug von Wasser konzentriert und später quasi wieder rückverdünnt. Diese Prozessschritte können zu einer Verminderung oder einer Hemmung von Enzymaktivitäten führen.

Insbesondere umfasst die Schüttflüssigkeit ein Gemisch aus Ananassaft und Wasser.

Bevorzugt weist das Gemisch ein Verhältnis zwischen Ananassaft und Wasser von 4:1 - 1:4, insbesondere 3:1 - 1:3, im Speziellen 2:1 - 1:2, ganz speziell 1:1, auf.

Ganz besonders bevorzugt umfasst die Schüttflüssigkeit 100 % Ananassaft.

In einer anderen speziellen Ausführungsform umfasst die Schüttflüssigkeit 100 % Wasser.

Die Zugabe von Ananassaft hat diverse Vorteile:
- Der niedrige pH-Wert von Ananassaft fördert Milchsäurebakterien, da diese in einem sauren Milieu besser wachsen. Ausserdem kann der niedrige pH-Wert eine längere Haltbarkeit des Teiges und/oder der Backwaren herbeiführen, da unerwünschte Organismen unterdrückt werden.
- Die im Ananassaft natürlich enthaltenen Zucker und Nährstoffe dienen den Mikroorganismen als Nahrungsquelle. Dies kann den Fermentationsprozess beschleunigen und die Mikroorganismen stärken. Weiter tragen die Zucker und Nährstoffe dazu bei, die Aktivität der Mikroorganismen zu steigern
- Im Ananassaft enthaltene Enzyme, wie z. B. Cysteinproteasen wie z. B. Bromelain, Ananain und FB31, helfen Proteine im Mehl, insbesondere im Ackerbohnenmehl und/oder Ackerbohnenhülsenmehl, abzubauen. Dies kann die Verfügbarkeit von Nährstoffen für die Mikroorganismen erhöhen und die Fermentation unterstützen.

Im Besonderen beträgt die Partikelgrösse des Hülsenfruchtmehls und/oder Hülsenfruchthülsenmehls nach Schritt a) und vor Schritt b) 60 - 400 µm, insbesondere 100 - 300 µm, im Speziellen 150 - 250 µm, äusserst bevorzugt 200 µm.

Dies kann zu einer grossflächigeren Verfügbarkeit des Hülsenfruchtmehls und/oder Hülsenfruchthülsenmehls für die Mikroorganismen und somit zu einer verbesserten Fermentation führen.

Im Speziellen beträgt die Partikelgrösse des Hülsenfruchtmehls und/oder Hülsenfruchthülsenmehl nach Schritt a) und vor Schritt b) mindestens 100 µm, insbesondere mindestens 120 µm und/oder höchstens 300 µm, insbesondere höchstens 280 µm.

Damit kann eine verbesserte Verfügbarkeit des Hülsenfruchtmehls und/oder Hülsenfruchthülsenmehls für die Mikroorganismen erreicht und die Fermentation verbessert werden.

Die Bestimmung der Partikelgrössen und/oder der Partikelgrössenverteilung wird insbesondere durch eine Siebanalyse durchgeführt, im Besonderen durch Trockensiebung mit einem Siebturm, Nasssiebung und/oder Luftstrahlsiebung.

Es sind aber auch andere Methoden zur Bestimmung der Partikelgrösse und/oder Partikelgrössenverteilung möglich, insbesondere eine Laserbeugungs-Partikelgrössenanalyse. Im Speziellen wird diesbezüglich die Partikelgrössenverteilung mit Messgeräten der Mastersizer-, Insitec- und/oder Spraytec-Systeme der Malvern Panalytical GmbH gemessen.

Besonders bevorzugt beträgt der Gewichtsanteil der Hülsenfruchtmehlfraktion nach Schritt b) und vor Schritt c) 40 - 50 Gew. - %, insbesondere 35 - 45 Gew. - %, bezogen auf das Gesamtgewicht des Teiggemisches.

Insbesondere beträgt der Gewichtsanteil des behandelten Hülsenfruchtmehls und/oder Hülsenfruchthülsenmehls nach Schritt b) und vor Schritt c) 40 - 50 Gew. - %, insbesondere 35 - 45 Gew. - %, bezogen auf das Gesamtgewicht des Teiggemisches.

Durch diesen Anteil kann gewährleistet werden, dass den Mikroorganismen eine genügend grosse Nährstoffquelle zur Verfügung gestellt wird für eine möglichst effiziente Fermentation.

Es ist aber auch möglich, dass der Gewichtsanteil der Hülsenfruchtmehlfraktion, des behandelten Hülsenfruchtmehls und/oder Hülsenfruchthülsenmehls nach Schritt b) weniger als 35 Gew. - % oder mehr als 50 Gew. - %, bezogen auf das Gesamtgewicht des Teiggemisches, beträgt.

In einer weiteren bevorzugten Ausführungsform umfasst die Fermentation eine erste Fermentationsphase und eine zweite Fermentationsphase.

Beobachtete Vorteile dieser bevorzugten Ausführungsform sind:
- Eine erhöhte Hefekonzentration, was zu einer verbesserten Triebkraft und einem besseren Aufgehen des Teiges sowie zu einer luftigen Krume führt.
- Eine erhöhte Milchsäurebakterienkonzentration, insbesondere der Gattungen *Lactobacillus* und *Leuconostoc.* Dadurch wir eine Erhöhung des Säuregehalts erreicht, was zu einem verbesserten Geschmack, einer längeren Haltbarkeit und einer besseren Krume führt. Milchsäurebakterien tragen auch zur Verhinderung von Schimmel und der Ansiedlung unerwünschter Mikroorganismen bei.
- Eine erhöhte Produktion von organischen Säuren wie Milchsäure oder Essigsäure, was den Backwaren einen charakteristischen säuerlichen Geschmack verleiht und die Haltbarkeit verbessert, indem das Wachstum unerwünschter Mikroorganismen gehemmt wird.
- Eine erhöhte Enzymaktivität, z.B. von Amylase und Protease. Dies führt zu einer Verbesserung der Teigstruktur durch den Abbau von Stärke und Proteinen, was die Verarbeitung des Teigs erleichtert und die Textur des fertigen Brotes verbessert.
- Die Entwicklung komplexer Aromen, welche durch die Stoffwechselaktivitäten der Mikroorganismen erzeugt werden. Dadurch wird ein tieferer und reicherer Geschmack im fertigen Brot erreicht.
- Eine erhöhte Nährstoffverfügbarkeit im Teig, wodurch eine verbesserte Nährstoffaufnahme durch den Konsumenten möglich ist.

Es ist aber auch möglich, dass die Fermentation mehr als zwei Fermentationsphasen umfasst. Insbesondere kann die Fermentation auch nur eine Fermentationsphase umfassen.

Bevorzugt wird das Teiggemisch in der ersten Fermentationsphase mit der ersten Mikroorganismenkultur und in der zweiten Fermentationsphase mit einer zweiten Mikroorganismenkultur, insbesondere einer zweiten Hefe- und/oder Milchsäurebakterienkultur, vermengt.

Dadurch können in der ersten Fermentationsphase die Mikroorganismen initial aktiviert werden, sich vermehren und die Säurebildung kann so gestartet werden.

Ein weiterer Vorteil besteht darin, dass in der zweiten Fermentationsphase die Enzymproduktion, die Säurebildung und die Aromabildung maximiert werden können. Dadurch kann das Endprodukt, d.h. die Backware, stabilisiert werden.

In einer anderen bevorzugen Ausführungsform wird das Teiggemisch nur in der ersten Fermentationsphase mit der ersten Mikroorganismenkultur vermengt und in der zweiten Fermentationsphase werden keine weiteren Mikroorganismenkulturen beigefügt.

Dies hat den Vorteil, dass weniger Prozessschritte ausgeführt werden müssen, wodurch das Risiko einer Störung des Produktionsprozesses vermindert werden kann.

In einer besonders bevorzugten Ausführungsform ist die erste Mikroorganismenkultur eine Hefekultur, im Speziellen *Saccharomyces cerevisiae.*

In einer weiteren bevorzugten Ausführungsform ist die zweite Mikroorganismenkultur eine Milchsäurebakterienkultur.

In einer anderen bevorzugten Ausführungsform sind die erste und die zweite Mikroorganismenkultur identisch.

Im Besonderen sind die erste und die zweite Mikroorganismenkultur Hefekulturen der Gattung *Saccharomyces cerevisiae.*

In einer anderen bevorzugten Ausführungsform unterscheiden sich die Fermentationsbedingungen zwischen der ersten und der zweiten Fermentationsphase in Bezug auf die Temperatur, den pH-Wert, die Luftfeuchtigkeit und/oder die Fermentationszeit.

Im Speziellen verlaufen die erste Fermentationsphase und die zweite Fermentationsphase nicht identisch zueinander.

In einer weiteren bevorzugten Ausführungsform liegt die relative Luftfeuchtigkeit in der ersten und/oder zweiten Fermentationsphase bei 40 - 80 %, insbesondere bei 50 - 80 %, im Speziellen bei 70 - 80 %.

Dies trägt dazu bei, dass das Teiggemisch nicht austrocknet und die Fermentationsaktivität der Mikroorganismen gefördert wird.

Es ist aber auch möglich, dass die relative Luftfeuchtigkeit weniger als 40 % oder mehr als 80 % beträgt.

Insbesondere beträgt der Wassergehalt im Teiggemisch in Schritt b) und/oder Schritt c) zwischen 40 - 90 Gew. - %, im Speziellen 45 - 90 Gew. - %, bezogen auf das Gesamtgewicht des Teiggemisches.

Im Speziellen beträgt die Wasseraktivität, d.h. der a_{w}-Wert, des Teiggemisches in Schritt b) und/oder Schritt c) 0.5 - 0.9, besonders speziell 0.6 - 0.8.

Dies hat den Vorteil, dass das verfügbare Wasser im Teiggemisch ausreichend hoch ist, um die Aktivität der Mikroorganismen zu unterstützen.

Die Wasseraktivität ist ein Mass für das verfügbare Wasser, welches den Mikroorganismen im Teiggemisch biologisch zur Verfügung steht, im Gegensatz zu einer blossen Angabe des Wassergehalts.

Speziell bevorzugt liegt der pH-Wert des Teiggemisches in Schritt c) zwischen 3,0 - 7,0, insbesondere zwischen 3,5 - 6,5, besonders bevorzugt zwischen 4,0 und 6,0.

Dies kann der Förderung von Mikroorganismen dienen, die gut in einem sauren Milieu wachsen, wie z.B. Milchsäurebakterien.

Es ist aber auch möglich, dass der pH-Wert unter 3,0 oder über 7,0 liegt.

In einer weiteren bevorzugten Ausführungsform werden dem Teiggemisch in Schritt c) pH-regulierende Substanzen beigegeben, im Speziellen Zitronensäure, Milchsäure, Essigsäure, Acerolasaftkonzentrat, Calciumcarbonat, und/oder Phosphate, insbesondere Monophosphate und/oder Diphosphate.

Dies hat den Vorteil, dass ein gewünschter pH-Bereich aufrechterhalten werden kann, womit die Aktivität der Mikroorganismen sowie die Effizienz der Fermentation gefördert werden kann.

In einer weiteren bevorzugten Ausführungsform liegt der pH-Wert des Teiggemisches in der zweiten Fermentationsphase zwischen 4,0 - 5,0, insbesondere bei 3,5 - 4,5.

In einer besonders bevorzugten Ausführungsform dauert die erste Fermentationsphase 8 - 28 Stunden, insbesondere 10 - 26 Stunden, im Speziellen 12 - 24 Stunden, und/oder die zweite Fermentationsphase 52 - 64 Stunden, insbesondere 50 - 62 Stunden, im Speziellen 48 - 60 Stunden, äusserst bevorzugt 46 - 58 Stunden, besonders speziell 44 - 56 Stunden.

Dies hat den Vorteil, dass das Teiggemisch möglichst lange fermentiert werden kann, was u.a. zu einer schnelleren Teigentwicklung, einer besseren Teigstruktur und einem höheren finalen Backvolumen und führt.

In einer weiteren besonders bevorzugten Ausführungsform ist zwischen der ersten und der zweiten Fermentationsphase eine Zwischenphase vorhanden.

Dies hat den Vorteil, dass die Bedingungen wie z.B. der pH-Wert, die Luftfeuchtigkeit und/oder die Temperatur für die zweite Fermentationsphase optimiert werden können und/oder das Teiggemisch zwischenbehandelt werden kann, um das Teiggemisch und/oder die darin enthaltenen Mikroorganismen für die zweite Fermentationsphase optimal vorzubereiten.

Im Besonderen wird das nach der ersten Fermentationsphase erhaltene Teiggemisch in der Zwischenphase umgefüllt und/oder durchmischt.

Bei einer Umfüllung handelt es sich um den Transfer des Teiggemisches von einem ersten Behälter in einen zweiten Behälter.

Dies dient dazu, eine gleichmässige Verteilung der Mikroorganismen und/oder der Nährstoffe im Teiggemisch zu gewährleisten und/oder Klumpenbildung zu vermeiden. Ausserdem wird dadurch sichergestellt, dass alle Teile des Teiggemisches gleichermassen fermentiert werden. Weiter kann dadurch eine gleichmässige Belüftung und Temperaturverteilung im gesamten Teiggemisch herbeigeführt werden, was das Wachstum und die metabolische Aktivität der Mikroorganismen, insbesondere von aeroben Mikroorganismen wie Hefe, begünstigt. Zudem wird verhindert, dass bestimmte Bereiche im Teiggemisch überhitzen oder zu kalt werden. Ein weiterer Vorteil einer Umfüllung/Durchlüftung ist, dass Stoffwechselprodukte, z.B. CO₂, entfernt werden können, die sich während der Fermentation angesammelt haben und das Wachstum der Mikroorganismen hemmen könnten.

Insbesondere wird die Temperatur während der Zwischenphase konstant gehalten.

Dies hat den Vorteil, dass die Mikroorganismen dadurch keinem Stress basierend auf Temperaturschwankungen ausgesetzt werden.

Im Speziellen wird das nach der ersten Fermentationsphase erhaltene Teiggemisch mit Wasser befeuchtet.

Dadurch kann der Feuchtigkeitsgehalt des Teiggemisches auf einem optimalen Niveau gehalten werden, wodurch den Mikroorganismen eine ausreichende Menge an Wasser für die Fermentationsaktivität zur Verfügung gestellt wird.

In einer weiteren bevorzugten Ausführungsform wird das nach der ersten Fermentationsphase erhaltene Teiggemisch in der Zwischenphase belüftet.

Dies führt dazu, dass die Mikroorganismen mit mehr Sauerstoff versorgt werden und dass durch die Fermentation entstandene Gase, insbesondere CO₂, zumindest teilweise entfernt werden können. Dadurch verbessert sich die mikrobielle Aktivität.

Im Besonderen kann dem Teiggemisch in der Zwischenphase weiteres Hülsenfruchtmehl und/oder Hülsenfruchthülsenmehl, eine stärkeangereicherte Hülsenfruchtmehlfraktion und/oder eine weitere Schüttflüssigkeit zugegeben werden. Dies dient dazu, die Mikroorganismen zu füttern und somit den Fermentationsprozess zu unterstützen.

Besonders bevorzugt kann dem Teiggemisch in der Zwischenphase eine weitere stärkeangereicherte Hülsenfruchtmehlfraktion zugegeben werden.

In einer weiteren bevorzugten Ausführungsform werden dem Teiggemisch in der Zwischenphase pH-regulierende Substanzen beigegeben, im Speziellen Zitronensäure, Milchsäure, Essigsäure, Acerolasaftkonzentrat, Calciumcarbonat, und/oder Phosphate, insbesondere Monophosphate und/oder Diphosphate.

Dies ist vorteilhaft, um optimale Bedingungen für die zweite Fermentationsphase zu schaffen.

Insbesondere wird in der Zwischenphase in Bezug auf das Teiggemisch die Homogenität, Luftfeuchtigkeit, Temperatur, Sauerstoffzufuhr, der pH-Wert und/oder das Vorhandensein von Stoffwechselprodukten kontrolliert und/oder reguliert.

Eine Regulierung kann je nach zu regulierendem Parameter wie folgt aussehen: Die Homogenität kann durch den Transfer des Teiggemisches in einen anderen Behälter verbessert werden, die Luftfeuchtigkeit kann durch Zugabe von Wasser erhöht oder durch Entnahme von Wasser gesenkt werden, die Temperatur kann durch Erhöhung oder Senkung angepasst werden, die Sauerstoffzufuhr kann durch das Einbringen von zusätzlichem Sauerstoff zum Teiggemisch erhöht oder durch das Abführen von Sauerstoff gesenkt werden, der pH-Wert kann durch die Zugabe von sauren Substanzen gesenkt oder durch die Zugabe von basischen Substanzen erhöht werden, Stoffwechselprodukte können in ihrer Aktivität gefördert oder gehemmt werden, z.B. durch die Zugabe von Substraten oder das Entfernen der Stoffwechselprodukte. Es ist auch möglich eine Regulierung der Stoffwechselprodukte durch eine Entfernung dieser Produkte aus dem Teiggemisch zu realisieren.

Dies hilft möglichst gut Bedingungen zu schaffen, um das Teiggemisch für eine optimale Fermentation in der zweiten Fermentationsphase vorzubereiten.

In einer weiteren bevorzugten Ausführungsform läuft die Fermentation in der ersten Fermentationsphase bei zunehmender und in der zweiten Fermentationsphase bei abnehmender Temperatur ab.

Dadurch kann der gesamte Fermentationsprozess besser kontrolliert werden. Z.B. kann ein gezielter Einsatz gewünschter Mikroorganismen erfolgen. Weiter kann die Aktivität der Mikroorganismen gesteuert werden, sodass eine möglichst effiziente Fermentation erreicht wird. Ausserdem können die erste und die zweite Fermentationsphase optimal an die jeweiligen Mikroorganismen angepasst werden. Entsprechend können für unterschiedliche Mikroorganismen die jeweils optimalen Bedingungen für ihr Wachstum und ihre Aktivität geschaffen werden.

Besonders bevorzugt liegt die zunehmende Temperatur während der ersten Fermentationsphase zwischen 10 - 36 °C, insbesondere zwischen 12 - 28 °C, im Speziellen zwischen 15 - 25 °C.

Es ist aber auch möglich, dass die zunehmende Temperatur zwischen <10 °C - 36 °C liegt.

Gemäss einer weiteren bevorzugten Ausführungsform liegt die abnehmende Temperatur während der zweiten Fermentationsphase zwischen 2 - 36 °C, insbesondere zwischen 2 - 28 °C, im Speziellen zwischen 2 - 25 °C, äusserst bevorzugt zwischen 2 - 20 °C. Insbesondere weist die zunehmende Temperatur eine Maximaltemperatur von 30 - 36 °C und die abnehmende Temperatur eine Minimaltemperatur von 2 - 5 °C auf.

Die Erfindung betrifft zudem in einem zweiten Aspekt ein Vorteig, vorzugsweise ein Vorteigkonzentrat, erhalten durch ein Verfahren zur Herstellung eines Vorteiges, vorzugsweise eines Vorteigkonzentrates, wie vorstehend beschrieben.

### Kurze Beschreibung der Zeichnungen

- Fig. 1: Eine schematische Darstellung des erfindungsgemässen Verfahrens zur Herstellung eines Vorteiges, vorzugsweise eines Vorteigkonzentrates.
- Fig. 2: Eine schematische Darstellung des erfindungsgemässen Verfahrens zur Herstellung eines Vorteiges, vorzugsweise eines Vorteigkonzentrates, umfassend eine erste Fermentationsphase (Schritt c1)) und eine zweite Fermentationsphase (Schritt c2)).
- Fig. 3: Eine schematische Darstellung des erfindungsgemässen Verfahrens zur Herstellung eines Vorteiges, vorzugsweise eines Vorteigkonzentrates, umfassend eine erste Fermentationsphase (Schritt c1)), eine Zwischenphase (Schritt cz)) und eine zweite Fermentationsphase (Schritt c2)).

Grundsätzlich sind in den Figuren gleiche Teile mit gleichen Bezugszeichen versehen.

### Wege zur Ausführung der Erfindung

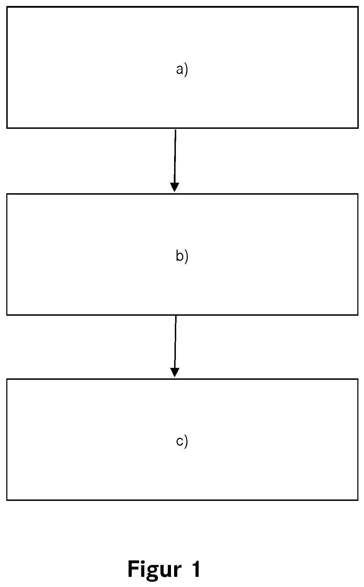

**Fig. 1** zeigt eine schematische Darstellung des erfindungsgemässen Verfahrens zur Herstellung eines Vorteiges, vorzugsweise eines Vorteigkonzentrates. Das Verfahren umfasst die folgenden Schritte:
a) Mechanische Behandlung, insbesondere durch Windsichten, eines Hülsenfruchtmehls, insbesondere von Ackerbohnenmehl, und/oder eines Hülsenfruchthülsenmehls, insbesondere Ackerbohnenhülsenmehl;
b) Vermengung des behandelten Hülsenfruchtmehls und/oder Hülsenfruchthülsenmehls aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur und
c) Fermentation, insbesondere eine Feststofffermentation, des aus Schritt b) erhaltenen Teiggemisches, wobei
   - die Fermentation mindestens eine Fermentationsphase umfasst,
   - die Fermentation gesamthaft bis zu 72 Stunden, insbesondere 18 - 72 Stunden, dauert und
   - die Fermentation bei zunehmender und im Anschluss bei abnehmender Temperatur abläuft, insbesondere so, dass die Temperatur des Teiggemisches während der Fermentation eine Maximaltemperatur von höchstens 36 °C und am Ende der Fermentation eine Minimaltemperatur von 2 - 5 °C aufweist.

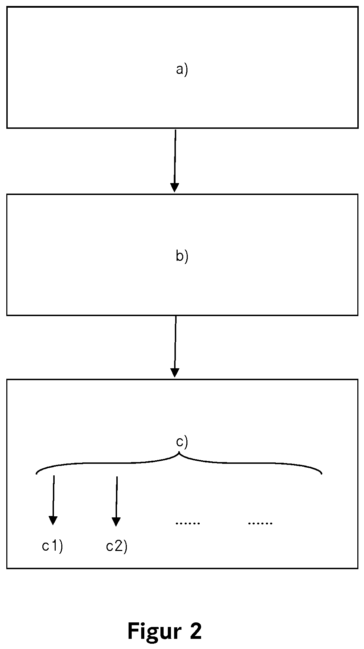

**Fig. 2** zeigt eine schematische Darstellung des erfindungsgemässen Verfahrens zur Herstellung eines Vorteiges, vorzugsweise eines Vorteigkonzentrates, umfassend eine erste Fermentationsphase (Schritt c1)) und eine zweite Fermentationsphase (Schritt c2)). Das Verfahren umfasst die folgenden Schritte:
a) Mechanische Behandlung, insbesondere durch Windsichten, eines Hülsenfruchtmehls, insbesondere von Ackerbohnenmehl, und/oder eines Hülsenfruchthülsenmehls, insbesondere Ackerbohnenhülsenmehl;
b) Vermengung des behandelten Hülsenfruchtmehls und/oder Hülsenfruchthülsenmehls aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur und
c) Fermentation, insbesondere eine Feststofffermentation, des aus Schritt b) erhaltenen Teiggemisches, wobei
   - die Fermentation eine erste (c1)) und eine zweite (c2)) Fermentationsphase umfasst;
   - die Fermentation gesamthaft bis zu 72 Stunden, insbesondere 18 - 72 Stunden, dauert;
   - die Fermentation in der ersten (c1) Fermentationsphase bei zunehmender Temperatur abläuft, insbesondere so, dass die Temperatur des Teiggemisches während der ersten (c1) Fermentationsphase eine Maximaltemperatur von 36 °C aufweist und
   - die Fermentation in der zweiten (c2) Fermentationsphase bei abnehmender Temperatur abläuft, insbesondere so, dass die Temperatur des Teiggemisches am Ende eine Temperatur von 2 - 5 °C aufweist.

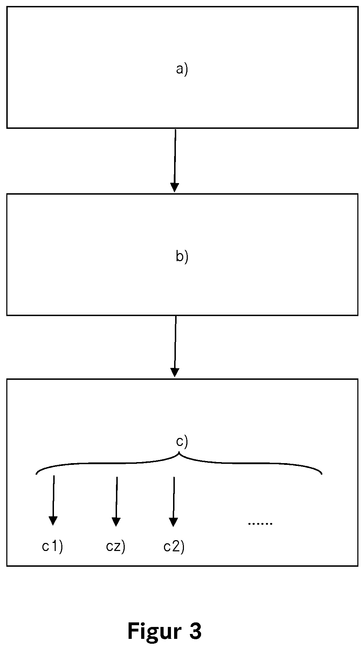

**Fig. 3** zeigt eine schematische Darstellung des erfindungsgemässen Verfahrens zur Herstellung eines Vorteiges, vorzugsweise eines Vorteigkonzentrates, umfassend eine erste Fermentationsphase (Schritt c1)), eine Zwischenphase (Schritt cz)) und eine zweite Fermentationsphase (Schritt c2)). Das Verfahren umfasst die folgenden Schritte:
a) Mechanische Behandlung, insbesondere durch Windsichten, eines Hülsenfruchtmehls, insbesondere von Ackerbohnenmehl, und/oder eines Hülsenfruchthülsenmehls, insbesondere von Ackerbohnenhülsenmehl;
b) Vermengung des behandelten Hülsenfruchtmehls und/oder Hülsenfruchthülsenmehls aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur und
c) Fermentation, insbesondere eine Feststofffermentation, des aus Schritt b) erhaltenen Teiggemisches, wobei
   - die Fermentation eine erste (c1)) Fermentationsphase, eine Zwischenphase (cz)) und eine zweite (c2)) Fermentationsphase umfasst;
   - die Fermentation gesamthaft bis zu 72 Stunden, insbesondere 18 - 72 Stunden, dauert;
   - die Fermentation in der ersten (c1) Fermentationsphase bei zunehmender Temperatur abläuft, insbesondere so, dass die Temperatur des Teiggemisches während der ersten (c1) Fermentationsphase eine Maximaltemperatur von 36 °C aufweist und
   - die Fermentation in der zweiten (c2) Fermentationsphase bei abnehmender Temperatur abläuft, insbesondere so, dass die Temperatur des Teiggemisches am Ende eine Temperatur von 2 - 5 °C aufweist.

Die Figuren 1 - 3 zeigen lediglich mögliche und nicht abschliessende Ausführungsbeispiele des erfindungsgemässen Verfahrens.

Beispielsweise können in Fig. 3 zusätzlich zu der ersten und der zweiten Fermentationsphase (Schritte c1) und c2)) weitere Fermentationsphasen folgen, wobei zwischen den weiteren Fermentationsphasen wiederum weitere Zwischenphasen vorhanden sein können.

## Patentansprüche

1. Verfahren zur Herstellung eines Vorteiges, vorzugsweise eines Vorteigkonzentrates, umfassend die Schritte:
a) Mechanische Behandlung, insbesondere durch Windsichten, eines Hülsenfruchtmehls, insbesondere von Ackerbohnenmehl, und/oder eines Hülsenfruchthülsenmehls, insbesondere von Ackerbohnenhülsenmehl;
b) Vermengung des behandelten Hülsenfruchtmehls und/oder Hülsenfruchthülsenmehls aus Schritt a) zu einem Teiggemisch mit einer Schüttflüssigkeit sowie mit einer ersten Mikroorganismenkultur, insbesondere mit einer ersten Hefe- und/oder Milchsäurebakterienkultur und
c) Fermentation, insbesondere Feststofffermentation, des aus Schritt b) erhaltenen Teiggemisches, wobei
- die Fermentation mindestens eine Fermentationsphase umfasst,
- die Fermentation gesamthaft bis zu 72 Stunden, insbesondere 18 - 72 Stunden, dauert und
- die Fermentation bei zunehmender und im Anschluss bei abnehmender Temperatur abläuft, insbesondere so, dass die Temperatur des Teiggemisches während der Fermentation eine Maximaltemperatur von höchstens 36 °C und am Ende der Fermentation eine Minimaltemperatur von 2 - 5 °C aufweist.

2. Verfahren zur Herstellung eines Vorteiges nach Anspruch 1, wobei das Hülsenfruchtmehl und/oder Hülsenfruchthülsenmehl auf mindestens einem Mehl basierend auf Erbsen, insbesondere Gelberbsen und/oder Grünerbsen, Bohnen, insbesondere weisse Bohnen, grüne Bohnen, rote Bohnen und/oder Ackerbohnen, I<ichererbsen, Linsen, insbesondere rote Linsen und/oder grüne Linsen, Lupinen, insbesondere Süsslupinen, und/oder Sojabohnen basiert.

3. Verfahren zur Herstellung eines Vorteiges nach einem der vorangehenden Ansprüche, wobei die Schüttflüssigkeit Wasser, Hefefiltratwasser und/oder Ananassaft ist.

4. Verfahren zur Herstellung eines Vorteiges nach einem der vorangehenden Ansprüche, wobei die Partikelgrösse des Hülsenfruchtmehls und/oder Hülsenfruchthülsenmehls nach Schritt a) und vor Schritt b) 60 - 400 µm, insbesondere 100 - 300 µm, im Speziellen 150 - 250 µm, äusserst bevorzugt 200 µm, beträgt.

5. Verfahren zur Herstellung eines Vorteiges nach einem der vorangehenden Ansprüche, wobei der Gewichtsanteil des behandelten Hülsenfruchtmehls und/oder Hülsenfruchthülsenmehls nach Schritt b) und vor Schritt c) 40 - 50 Gew. - %, insbesondere 35 - 45 Gew. -%, bezogen auf das Gesamtgewicht des Teiggemisches, beträgt.

6. Verfahren zur Herstellung eines Vorteiges nach einem der vorangehenden Ansprüche, wobei der pH-Wert des Teiggemisches in Schritt c) zwischen 3,0 - 7,0, insbesondere zwischen 3,5 - 6,5, besonders bevorzugt zwischen 4,0 und 6,0, liegt.

7. Verfahren zur Herstellung eines Vorteiges nach einem der vorangehenden Ansprüche, wobei die Fermentation eine erste Fermentationsphase und eine zweite Fermentationsphase umfasst.

8. Verfahren zur Herstellung eines Vorteiges nach Anspruch 7, wobei das Teiggemisch in der ersten Fermentationsphase mit der ersten Mikroorganismenkultur und in der zweiten Fermentationsphase mit einer zweiten Mikroorganismenkultur, insbesondere einer zweiten Hefe- und/oder Milchsäurebakterienkultur, vermengt wird.

9. Verfahren zur Herstellung eines Vorteiges nach Anspruch 8, wobei die erste und die zweite Mikroorganismenkultur identisch sind.

10. Verfahren zur Herstellung eines Vorteiges nach einem der Ansprüche 7 bis 9, wobei die relative Luftfeuchtigkeit in der ersten und/oder zweiten Fermentationsphase bei 40 - 80 %, insbesondere bei 50 - 80 %, im Speziellen bei 70 - 80 %, liegt.

11. Verfahren zur Herstellung eines Vorteiges nach einem der Ansprüche 7 bis 10, wobei die erste Fermentationsphase 8 - 28 Stunden, insbesondere 10 - 26 Stunden, im Speziellen 12 - 24 Stunden, dauert und/oder die zweite Fermentationsphase 52 - 64 Stunden, insbesondere 50 - 62 Stunden, im Speziellen 48 - 60 Stunden, äusserst bevorzugt 46 - 58 Stunden, besonders speziell 44 - 56 Stunden, dauert.

12. Verfahren zur Herstellung eines Vorteiges nach einem der Ansprüche 7 bis 11, wobei zwischen der ersten und der zweiten Fermentationsphase eine Zwischenphase vorhanden ist und in der Zwischenphase das nach der ersten Fermentationsphase erhaltene Teiggemisch umgefüllt, durchmischt und/oder belüftet, die Temperatur I<onstant gehalten, das nach der ersten Fermentationsphase erhaltene Teiggemisch mit Wasser befeuchtet und/oder dem Teiggemisch weiteres Hülsenfruchtmehl und/oder Hülsenfruchthülsenmehl, eine stärkeangereicherte Hülsenfruchtmehlfraktion, eine weitere Schüttflüssigkeit und/oder pH-regulierende Substanzen, im Speziellen Zitronensäure, Milchsäure, Essigsäure, Acerolasaftkonzentrat, Calciumcarbonat, und/oder Phosphate, insbesondere Monophosphate und/oder Diphosphate, zugegeben wird.

13. Verfahren zur Herstellung eines Vorteiges nach einem der Ansprüche 7 bis 12, wobei die Fermentation in der ersten Fermentationsphase bei zunehmender und in der zweiten Fermentationsphase bei abnehmender Temperatur abläuft.

14. Verfahren zur Herstellung eines Vorteiges nach Anspruch 13, wobei die zunehmende Temperatur während der ersten Fermentationsphase zwischen 10 - 36 °C, insbesondere zwischen 12 - 28 °C, im Speziellen zwischen 15 - 25 °C, liegt.

15. Verfahren zur Herstellung eines Vorteiges nach einem der Ansprüche 13 bis 14, wobei die abnehmende Temperatur während der zweiten Fermentationsphase zwischen 2 - 36 °C, insbesondere zwischen 2 - 28 °C, im Speziellen zwischen 2 - 25 °C, äusserst bevorzugt zwischen 2 - 20 °C, liegt.

16. Verfahren zur Herstellung eines Vorteiges nach einem der Ansprüche 13 - 15, wobei die zunehmende Temperatur eine Maximaltemperatur von 30 - 36 °C und die abnehmende Temperatur eine Minimaltemperatur von 2 - 5 °C aufweist.
